# FASCICULE DE BREVET EUROPEEN

(11) **EP 1 190 937 B1**
(45) Date de publication et mention de la délivrance du brevet: **06.04.2005**
(21) Numéro de dépôt: 01402424.4
(22) Date de dépôt: 21.09.2001
(51) Int. Cl.: B62D 21/11, B62D 21/15, B62D 29/00, B62D 35/02

(54) **Carénage sous moteur pour véhicule à résistance améliorée**
Verkleidungsteil für die Unterseite eines Motors mit verbesserter Festigkeit
Fairing for the underside of an automobile with improved resistance

(30) Priorité: 22.09.2000 FR 0012077
(43) Date de publication de la demande: 27.03.2002
(73) Titulaire: PEGUFORM FRANCE, 27950 Saint Marcel (FR)
(72) Inventeur: Renault, Thierry, 27200 Vernon (FR)
(74) Mandataire: Le Forestier, Eric

(56) Documents cités:
- EP-A- 0 891 917
- FR-A- 2 791 628
- PATENT ABSTRACTS OF JAPAN vol. 008, no. 227 (M-332), 18 octobre 1984 (1984-10-18) & JP 59 109467 A (MITSUBISHI RAYON KK), 25 juin 1984 (1984-06-25)

## Description

L'invention concerne les carénages sous moteur pour véhicule automobile.

Actuellement, les pièces de fermeture sous moteur, appelées communément carénage sous moteur, qui existent sur de nombreux véhicules automobiles, sont de simples plaques réalisées en matière thermoplastique renforcée estampable, ou en SMC ou bien en polypropylène injecté, fixées à l'extrémité basse du pare-chocs et sous le moteur en appui sur le berceau moteur.

De telles pièces de fermeture comme leur nom l'indique, ont pour fonction de fermer la partie inférieure du berceau moteur pour isoler le moteur de l'extérieur et le protéger ainsi des chocs éventuels lors, par exemple, d'un passage de bord de trottoir, et des projections d'eau et de boue lors de la marche du véhicule. Une telle pièce de fermeture permet également d'éviter que des écoulements d'huile provenant du moteur ne tombent sur le sol.

Il a été récemment envisagé d'utiliser une telle pièce de fermeture sous moteur pour absorber une partie de l'énergie cinétique en cas de choc frontal, en biais ou latéral du véhicule.

La demande EP-0 847 912 selon le préambule de la revendication 1 présente un carénage sous moteur ayant une partie plane comprenant deux couches constituées par un tissu équilibré de brins comprenant des fibres de verre noyées dans du polypropylène, ainsi qu'une couche centrale d'une matière thermoplastique renforcée prise en sandwich entre les deux précédentes. Le carénage porte également deux longeronnets.

Cette pièce a l'inconvénient d'utiliser un matériau mis en oeuvre à haute pression (250. 10⁵ Pa) dans une presse de 2 500 tonnes pour une surface de 1 m² et d'avoir une densité moyenne de 1,2, soit un poids par m² de 3 kg/m² pour une épaisseur de 2,5 mm.

Cette pièce est donc coûteuse à fabriquer et relativement lourde une fois achevée. De plus, sa rigidité peut s'avérer insuffisante. Or, une bonne rigidité est souhaitable pour limiter le nombre de fixations de la pièce au véhicule et assurer une meilleure stabilité du carénage pendant un crash à 56 ou 65 km/h.

Un but de l'invention est de fournir un carénage moins lourd et plus rigide, et de préférence plus économique à fabriquer.

En vue de la réalisation de ce but, on prévoit selon rinvention un carénage sous moteur pour véhicule, comportant une partie essentiellement plane et au moins un profilé, l'un parmi la partie plane et le profilé comprenant un premier matériau comportant deux couches en matière thermoplastique renforcée entre lesquelles s'étend une couche intermédiaire, l'autre parmi la partie plane et le profilé comprenant un deuxième matériau différent du premier matériau, dans lequel la couche intermédiaire est une couche de matière alvéolaire.

Ainsi, on peut sans difficulté obtenir un carénage ayant une épaisseur de 5 mm avec un poids de 1600 à 1700 g/m². De plus, ce carénage peut être obtenu au moyen d'un procédé à basse pression utilisant par exemple une presse de 200 tonnes (et non plus de 2 500 tonnes). Enfin, la rigidité de ce nouveau carénage est plus élevée. Il présente par exemple une rigidité en flexion de 1 N.m² pour une épaisseur de 5 mm contre 0,4 N.m² pour un carénage antérieur ayant une épaisseur de 2,5 mm.

Le carénage selon l'invention pourra présenter en outre au moins l'une des caractéristiques suivantes :
- le matériau comprend au moins une couche de matière thermoplastique ;
- la partie plane comprend le premier matériau ;
- le profilé comprend le premier matériau ;
- la matière alvéolaire a une structure en nids d'abeille ;
- dans la partie plane, au moins l'une des couches en matière thermoplastique comprend des fibres thermoplastiques et des fibres de verre ;
- les fibres thermoplastiques et les fibres de verre sont tissées ;
- le profilé s'étend transversalement par référence à une direction de la pièce destinée à correspondre à la direction de marche du véhicule ;
- il comprend au moins deux profilés s'étendant parallèlement à une direction de la pièce destinée à correspondre à la direction de marche du véhicule ;
- le ou chaque profilé comprend un empilement de deux paires de couches en matière thermoplastique, et de deux couches de matière alvéolaire s'étendant respectivement entre les couches de chaque paire, et
- la partie plane présente des ondulations.

D'autres caractéristiques et avantages de l'invention apparaîtront encore dans la description suivante d'un mode préféré de réalisation donné à titre d'exemple non limitatif. Aux dessins annexés :
- les figures 1, 2 et 3 sont trois vues en perspective, de dessus et de côté d'un carénage selon un mode préféré de réalisation de l'invention ;
- la figure 4 est une vue schématique des empilements formant les matériaux du carénage de la figure 1 ;
- la figure 5 est une vue en perspective illustrant une variante de ce carénage ;
- la figure 6 est une vue en coupe transversale du montage d'un carénage selon un deuxième mode de réalisation dans un véhicule, la figure illustrant en outre de façon schématique une jambe de piéton ; et
- la figure 7 est une vue en perspective éclatée de la carrosserie du véhicule de la figure 6, sans les absorbeurs de choc.

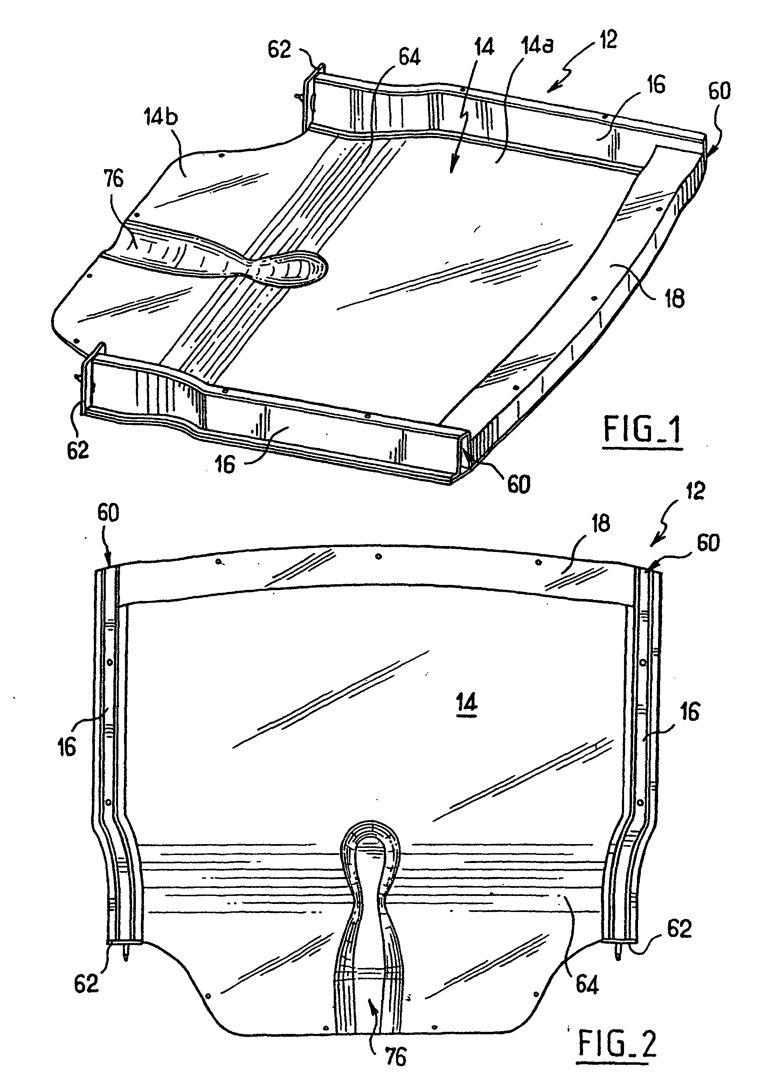

On a illustré aux figures 1 à 4 un premier mode de réalisation du carénage de l'invention.

Le carénage 12 comprend une paroi 14 de forme générale rectangulaire non rigoureusement plane, et deux longerons ou longeronnets profilés 16 s'étendant suivant la direction correspondant à la direction de marche du véhicule, près des bords latéraux respectifs de la paroi. Le carénage 12 comporte en outre un profilé transversal avant 18 sous la forme d'une poutre s'étendant près d'un bord avant de la paroi 14. En vue en plan, le profilé 18 forme avec les longerons 16 un "U" ouvert vers l'arrière. Les deux longerons 16 et le profilé 18 sont ici jointifs entre eux. Ils sont rapportés sur la face supérieure de la paroi 14.

Les longerons 16 et la poutre 18 ont en section transversale un profil en "U" ouvert vers le bas. L'ouverture de ce profil est obturée par la paroi. Les trois profilés sont creux.

Les longeronnets 16 ont une extrémité avant 60 ouverte et une extrémité arrière 62 obturée par une paroi. Les longeronnets 16 ont des portions d'extrémité arrière plus rapprochées l'une de l'autre que les autres parties des longeronnets.

La poutre 18 a une forme légèrement cintrée en arc de cercle dans le plan du carénage, le centre de courbure s'étendant vers l'arrière du carénage et du véhicule.

La paroi ou partie plane 14 présente à l'arrière un décrochement 64 sous la forme d'une ondulation à profil en "S" séparant une portion avant 14a de la paroi d'une portion arrière 14b, cette dernière étant légèrement inclinée vers le haut par rapport à la portion avant.

Par ailleurs, la paroi 14 présente un renfoncement incurvé 76 s'étendant à partir du centre jusqu'au bord arrière du carénage. Le renfoncement coupe notamment l'ondulation 64. Le renfoncement, qui forme une saillie sur la face inférieure de la paroi, permet de ménager le volume nécessaire à l'encombrement de certaines parties de l'échappement du véhicule.

Le carénage illustré aux figures est fabriqué au moyen de quatre plaques comme décrit dans le document EP-0 847 912 au nom de la demanderesse. L'une des plaques sert à constituer la paroi 14 tandis que les trois autres plaques servent à former les longeronnets 16 et la poutre 18 respectivement.

Les plaques sont formées par estampage pour constituer ces parties. L'estampage a lieu soit dans la même presse, soit dans des presses différentes. Dans ce dernier cas, les longerons et la poutre sont rapportés sur la paroi 14 dans un deuxième temps.

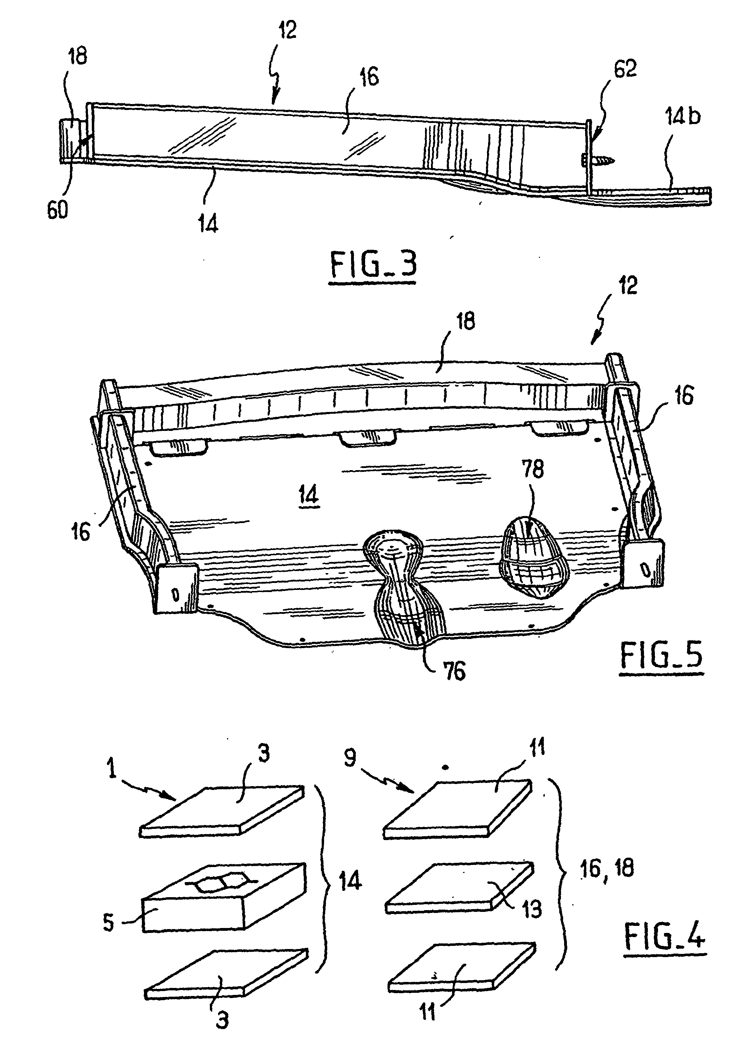

En référence à la figure 4, la partie plane 14 est formée à partir d'un empilement 1 comprenant deux peaux 3 et une couche intermédiaire 5 prise en sandwich entre les peaux. Chaque peau 3 comporte une matière thermoplastique renforcée par des fibres de verre. En l'espèce, la peau pourra être formée par un mélange de fibres de polypropylène et de fibres de verre, par exemple la matière connue sous la marque TRE. Une autre possibilité consiste à former la peau au moyen d'un tissu de fibres de polypropylène et de fibres de verre comêlées, par exemple le tissu connu sous la marque Twintex. La couche intermédiaire 5 sera formée par une structure alvéolaire. Il s'agira par exemple d'une matière plastique à structure en nids d'abeille. Les peaux auront par exemple un grammage de 500 à 700 g/m² et la couche intermédiaire aura par exemple une épaisseur de 5 mm.

L'empilement formé de ces trois couches est estampé comme une seule couche, par exemple conformément à l'enseignement du document EP-0 649 736 au nom de la demanderesse. Au cours de cet estampage, la structure alvéolaire subit des écrasements locaux permettant de la déformer sans altérer sensiblement sa solidité d'ensemble.

Dans le cas des longerons 16 et/ou de la poutre 18, on peut les former à partir d'un empilement comprenant les deux peaux et la couche intermédiaire ainsi qu'au moins une couche supplémentaire. Cette couche pourra être par exemple une peau supplémentaire identique aux deux autres peaux. Un tel empilement sera adapté si l'effort d'écrasement à combattre se situe entre 20 et 40 kN. On pourra donner à l'empilement avant estampage une épaisseur de 5 à 10 mm.

Dans le cas d'un effort d'environ 40 kN, on pourra utiliser un empilement formé par un double sandwich constitué par deux fois le sandwich précité. On aura ainsi de bas en haut, une peau, une couche alvéolaire, deux peaux, une couche alvéolaire et une peau. On place cet empilement à six couches dans le moule de compression.

Pour des efforts entre 40 et 70 kN, on pourra former les profilés au moyen d'un empilement comprenant une ou plusieurs couches de matière thermoplastique renforcée estampable en donnant à l'ensemble avant empilement une épaisseur de 3 à 8 mm par exemple. En l'espèce, l'empilement 9 formant chaque profilé comprend deux peaux 11 en tissu de fibres thermoplastiques et de fibres de verre comêlées, entre lesquelles s'étend une couche 13 de matière thermoplastique renforcée estampable.

En l'absence de poutre 18, on peux avoir soit deux outillages (un pour la partie plane et un pour les longeronnets) et faire un assemblage en reprise, soit avoir un seul outillage de compression avec l'empilement pour la partie plane au centre et ceux pour les deux longerons sur les côtés avec une chambre de compression pour mouler les longerons à haute pression.

Les profilés pourront être formés à partir de polypropylène renforcé par des fibres longues.

Ils pourront être en SMC (Sheet Molding Compound : moulage de préimprégnés).

Dans un autre mode de réalisation, on pourra prévoir que les longeronnets 16 et/ou la poutre18 sont réalisés au moyen de l'empilement 1 comprenant les deux peaux et la couche intermédiaire alvéolaire, la paroi 14 étant formée avec un empilement dépourvu d'une telle couche alvéolaire.

Dans le mode de réalisation illustré aux figures 1 à 4, on pourra fixer le carénage à l'avant sur le bas du bouclier du véhicule, sur les côtés, sur un tirant du véhicule et à l'arrière sur le berceau moteur. Il est possible de se servir du carénage comme support de la cassette de refroidissement du véhicule.

Le matériau alvéolaire pourra être une mousse. La structure en nids d'abeille pourra être en polypropylène ou en polycarbonate.

Des essais de crash ont montré que le rôle de la paroi de fermeture 14 dans le choc était d'être suffisamment rigide pour maintenir en position les longerons. Les autres fonctions de la paroi 14 sont celles d'un carénage classique c'est-à-dire d'améliorer l'aérodynamique du véhicule et de jouer un rôle acoustique tout en résistant aux agressions de l'environnement (tenue aux fluides de l'environnement moteur, tenue au gravillonnage).

On a illustré à la figure 5 une variante de ce mode de réalisation. Ici, la partie plane présente une deuxième cavité 78, décentrée celle-ci.

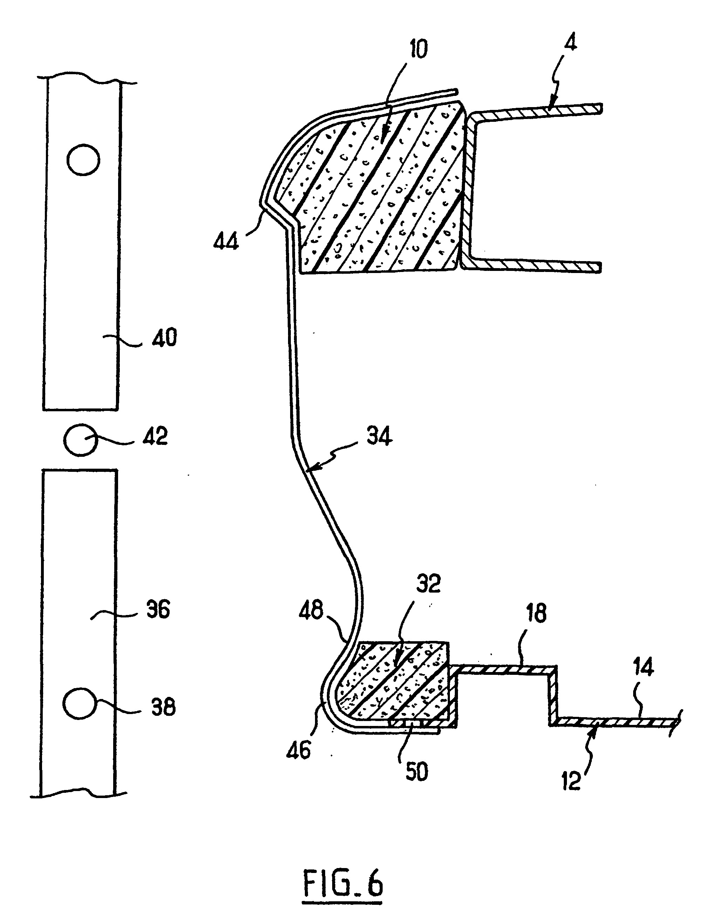

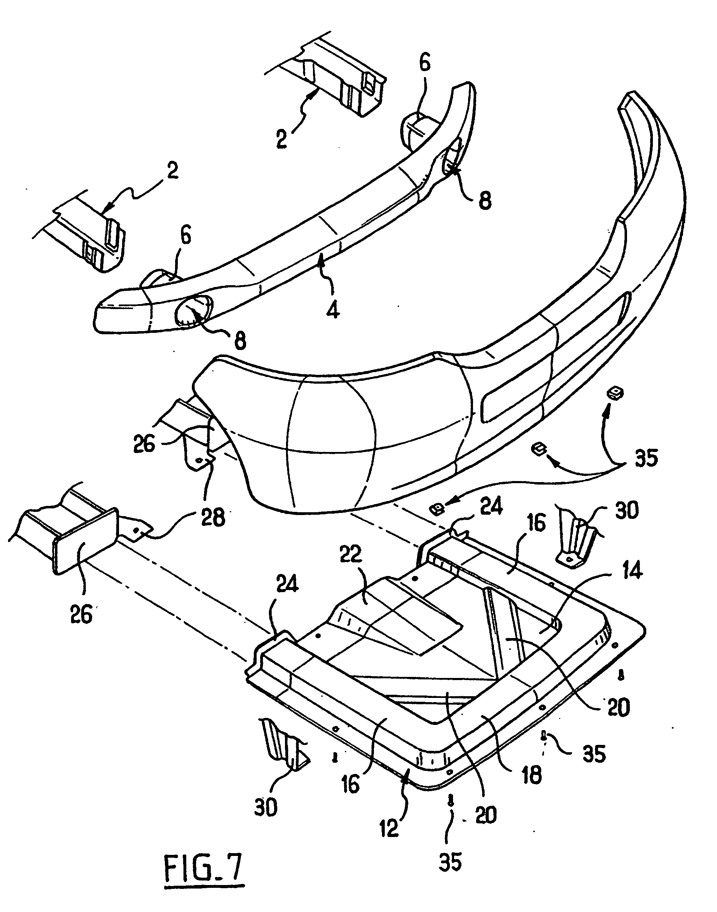

On a illustré aux figures 6 et 7 un deuxième mode de réalisation du carénage selon l'invention. Le carénage est constitué par les mêmes matériaux que dans le premier mode de réalisation et est très proche de celui du premier mode. On a représenté partiellement une carrosserie et un châssis de véhicule incluant le carénage selon l'invention. Le châssis comprend deux longerons longitudinaux 2 d'un type classique s'étendant suivant la direction de marche du véhicule, par exemple en métal.

La carrosserie comprend une poutre 4 de pare-chocs, profilée, s'étendant transversalement à la direction de marche, en regard d'une extrémité avant des longerons 2, de l'un à l'autre des longerons. Cette poutre 4 est ici constituée en matériau thermoplastique renforcé par des fibres de verre. Elle est réalisée par moulage. La poutre a un profil transversal en "U" ouvert en direction de l'arrière du véhicule par référence au sens de marche principal du véhicule. Elle comporte deux protubérances 6 de forme générale cylindrique s'étendant au niveau de deux ouvertures 8 de la face avant de la poutre, en direction de l'arrière. Les protubérances 6 sont d'un seul tenant avec la poutre. Elles sont adaptées à être reçues dans les extrémités avant ouvertes des longerons 2 pour la fixation de la poutre à ceux-ci.

La carrosserie comprend un absorbeur de chocs supérieur 10 de forme profilée, réalisé en un matériau alvéolaire déformable tel qu'une mousse. Cet absorbeur 10 est monté devant la poutre 4, parallèlement à celle-ci, en appui contre la face avant de la poutre. Ce type d'absorbeur est connu en soi.

Le carénage 12 présente en outre deux profilés rectilignes 20 à profil trapézoïdal s'étendant en oblique à partir du centre du profilé avant 18 jusqu'au centre des longerons 16. La plaque présente une encoche 22 à son bord arrière. Le carénage a pour plan de symétrie le plan vertical longitudinal médian du véhicule.

Les longerons 16 présentent à leur extrémité arrière une butée plane 24, sous la forme d'une paroi obturant les longerons. Ces butées, perpendiculaires à la direction de marche du véhicule, viennent en appui contre des butées analogues 26 du berceau moteur du véhicule. Le carénage est ici fixée par son bord arrière à deux pattes horizontales 28 venues du berceau moteur, par ses bords latéraux à deux pattes supérieures 30 venues de pièces de la carrosserie connues en soi, différentes des longerons 2 et non directement fixées à ceux-ci, et par son bord avant à la peau de pare-chocs comme on va le voir. Il ne s'agit là que d'un exemple de fixation du carénage au véhicule et il est clair que d'autres modes de fixation peuvent être envisagés. De préférence, on ne reliera pas le carénage aux longerons 2 afin qu'un choc sur le carénage n'entraîne pas leur flexion.

La carrosserie comprend un absorbeur de chocs inférieur 32 de forme profilée réalisé en un matériau alvéolaire déformable tel qu'une mousse. Cet absorbeur est monté devant la poutre transversale 18 du carénage 12, en appui contre celle-ci et sur le bord avant de la plaque. Il est ici collé à ceux-ci. Alternativement, il pourra être soudé ou clipsé au profilé 18.

Le profilé transversal 18 s'étend sensiblement à la verticale de la poutre de pare-chocs 4 sous celle-ci. De même, l'absorbeur inférieur 32 s'étend sensiblement à la verticale de l'absorbeur supérieur 10.

La carrosserie comprend une peau 34 de pare-chocs, profilée, d'un type classique s'étendant devant les deux absorbeurs 10, 32, de l'un à l'autre de ceux-ci en recouvrant leur face avant et en les dissimulant à la vue depuis l'avant du véhicule. La peau 34 est fixée à chaque absorbeur de façon classique, par exemple pour l'absorbeur inférieur 32 au moyen de boulons 34 qui traversent également la paroi 14 du carénage.

Ce carénage 12 a une bonne stabilité lors d'un choc à 56 km/h. Lors d'un choc piéton, le profilé 18 sert de point de contact bas au niveau du tibia 36 dont le centre de gravité est situé au point 38. Le tibia est séparé de la jambe 40 par le genou 42. De préférence, on disposera le carénage suffisamment bas pour que le choc se produise le plus souvent au-dessous du centre de gravité 38 du tibia afin de faciliter l'amorce de la rotation de la jambe.

Si on veut absorber encore plus d'énergie (plus de 20 kJ par côté), on peut ajouter d'autres longerons sur la pièce, par exemple les longerons 20 de la figure 6.

On peut également donner une forme de tôle ondulée au carénage et créer un appui sur tout le fond du carénage (partie arrière) pour absorber de l'énergie sur toute la largeur du carénage en cas de crash.

Bien entendu, on pourra apporter à l'invention de nombreuses modifications sans sortir du cadre de celle-ci.

Ainsi, pourvu qu'au moins un profilé ait un matériau différent de celui de la partie plane, on pourra prévoir qu'au moins un autre profilé est formé d'un matériau identique à celui de la partie plane et par exemple s'étend d'une seule pièce avec celle-ci. Par exemple, après formation du profilé d'une seule pièce avec la partie plane et à un emplacement contiguë avec cette dernière, ce profilé pourra être replié sur la partie plane (pour obturer son ouverture en "U") par effet de charnière entre le profilé et la partie plane.

## Revendications

1. Carénage sous moteur (12) pour véhicule, comportant une partie (14) essentiellement plane et au moins un profilé (16, 18), l'un (14) parmi la partie plane et le profilé comprenant un premier matériau (1) comportant deux couches (3) en matière thermoplastique renforcée entre lesquelles s'étend une couche intermédiaire (5), l'autre (16,18) parmi la partie plane et le profilé comprenant un deuxième matériau (9) différent du premier matériau, **caractérisé en ce que** la couche intermédiaire (5) est une couche de matière alvéolaire.

2. Carénage selon la revendication 1, **caractérisé en ce que** le deuxième matériau (9) comprend au moins une couche de matière thermoplastique (11,13).

3. Carénage selon l'une des revendications 1 à 2, **caractérisé en ce que** la partie plane (14) comprend le premier matériau (1).

4. Carénage selon l'une des revendications 1 à 2, **caractérisé en ce que** le profilé comprend le premier matériau.

5. Carénage selon l'une des revendications 1 à 4, **caractérisé en ce que** la matière alvéolaire (5) a une structure en nids d'abeille.

6. Carénage selon l'une des revendications 1 à 5, **caractérisé en ce que** dans la partie plane (14), au moins l'une des couches en matière thermoplastique (3) comprend des fibres thermoplastiques et des fibres de verre.

7. Carénage selon la revendication 6, **caractérisé en ce que** les fibres thermoplastiques et les fibres de verre sont tissées.

8. Carénage selon l'une des revendications 1 à 7, **caractérisé en ce que** le profilé (18) s'étend transversalement par référence à une direction de la pièce (12) destinée à correspondre à la direction de marche du véhicule.

9. Carénage selon l'une des revendications 1 à 8, **caractérisé en ce qu'**il comprend au moins deux profilés (16) s'étendant parallèlement à une direction de la pièce (12) destinée à correspondre à la direction de marche du véhicule.

10. Carénage selon l'une des revendications 1 à 9, **caractérisé en ce que** le ou chaque profilé (16, 18) comprend un empilement de deux paires de couches en matière thermoplastique, et de deux couches de matière alvéolaire s'étendant respectivement entré les couches de chaque paire.

11. Carénage selon l'une des revendications 1 à 10, **caractérisé en ce que** la partie plane présente des ondulations.

## Patentansprüche

1. Verkleidung unterhalb eines Motors (12) für ein Fahrzeug, die einen im wesentlichen ebenen Abschnitt (14) und wenigstens ein Profil (16, 18) aufweist, wobei der eine (14) von dem ebenen Abschnitt und dem Profil ein erstes Material (1) aufweist, das zwei Schichten (3) aus einem verstärkten, thermoplastischen Material umfaßt, zwischen denen sich eine Zwischenschicht (5) erstreckt, und der andere (16, 18) von dem ebenen Abschnitt und dem Profil ein zweites Material (9) verschieden zum ersten Material aufweist, **dadurch gekennzeichnet, daß** die Zwischenschicht (5) eine Schicht aus einem zelligen Material ist.

2. Verkleidung nach Anspruch 1, **dadurch gekennzeichnet, daß** das zweite Material (9) wenigstens eine Schicht aus einem thermoplastischen Material (11, 13) aufweist.

3. Verkleidung nach einem der Ansprüche 1 bis 2, **dadurch gekennzeichnet, daß** der ebene Abschnitt (14) das erste Material (1) aufweist.

4. Verkleidung nach einem der Ansprüche 1 bis 2, **dadurch gekennzeichnet, daß** das Profil das erste Material aufweist.

5. Verkleidung nach einem der Ansprüche 1 bis 4, **dadurch gekennzeichnet, daß** das zellige Material (5) eine Bienenwabenstruktur hat.

6. Verkleidung nach einem der Ansprüche 1 bis 5, **dadurch gekennzeichnet, daß** im ebenen Abschnitt (14) wenigstens eine der Schichten aus dem thermoplastischen Material (3) thermoplastische Fasern und Glasfasern aufweist.

7. Verkleidung nach Anspruch 6, **dadurch gekennzeichnet, daß** die thermoplastischen Fasern und die Glasfasern gewebt sind.

8. Verkleidung nach einem der Ansprüche 1 bis 7, **dadurch gekennzeichnet, daß** das Profil (18) sich quer zu einer Richtung des Teils (12) erstreckt, die bestimmungsgemäß der Fahrtrichtung des Fahrzeuges entspricht.

9. Verkleidung nach einem der Ansprüche 1 bis 8, **dadurch gekennzeichnet, daß** sie wenigstens zwei Profile (16) aufweist, die sich parallel zu einer Richtung des Teils (12) erstrecken, die bestimmungsgemäß der Fahrtrichtung des Fahrzeuges entspricht.

10. Verkleidung nach einem der Ansprüche 1 bis 9, **dadurch gekennzeichnet, daß** das oder jedes Profil (16, 18) einen Stapel aus zwei Schichtenpaaren aus einem thermoplastischen Material und aus zwei Schichten aus einem zelligen Material aufweist, die sich jeweils zwischen den Schichten jedes Paares erstrecken.

11. Verkleidung nach einem der Ansprüche 1 bis 10, **dadurch gekennzeichnet, daß** der ebene Abschnitt Welligkeiten aufweist.

## Claims

1. Engine undertray (12) for a vehicle, comprising an essentially flat part (14) and at least one section piece (16, 18), one (14) out of the flat part and the section piece comprising a first material (1) with two layers (3) of reinforced thermoplastic between which an intermediate layer (5) extends, the other (16, 18) out of the flat part and the section piece comprising a second material (9) different than the first material, **characterized in that** the intermediate layer (5) is a layer of cellular material.

2. Undertray according to Claim 1, **characterized in that** the second material (9) comprises at least one layer of thermoplastic (11, 13).

3. Undertray according to one of Claims 1 and 2, **characterized in that** the flat part (14) comprises the first material (1).

4. Undertray according to one of Claims 1 and 2, **characterized in that** the section piece comprises the first material.

5. Undertray according to one of Claims 1 to 4, **characterized in that** the cellular material (5) has a honeycomb structure.

6. Undertray according to one of Claims 1 to 5, **characterized in that** in the flat part (14), at least one of the layers of thermoplastic (3) comprises thermoplastic fibres and glass fibres.

7. Undertray according to Claim 6, **characterized in that** the thermoplastic fibres and the glass fibres are woven.

8. Undertray according to one of Claims 1 to 7, **characterized in that** the section piece (18) runs transversely with reference to a direction of the component (12) that is intended to correspond to the direction of travel of the vehicle.

9. Undertray according to one of Claims 1 to 8, **characterized in that** it comprises at least two section pieces (16) running parallel to a direction of the component (12) that is intended to correspond to the direction of travel of the vehicle.

10. Undertray according to one of Claims 1 to 9, **characterized in that** the or each section piece (16, 18) comprises a stack of two pairs of layers of thermoplastic and two layers of cellular material, one extending between the layers of each respective pair.

11. Undertray according to one of Claims 1 to 10, **characterized in that** the flat part has corrugations.
